(19) Europäisches Patentamt
European Patent Office
Office européen des brevets

(11) **EP 3 169 898 B1**

(12) **EUROPÄISCHE PATENTSCHRIFT**

(45) Veröffentlichungstag und Bekanntmachung des Hinweises auf die Patenterteilung:
**02.12.2020   Patentblatt 2020/49**

(21) Anmeldenummer: **15739572.4**

(22) Anmeldetag: **17.07.2015**

(51) Int Cl.:
***F03D 1/06*** *(2006.01)*

(86) Internationale Anmeldenummer:
**PCT/EP2015/066380**

(87) Internationale Veröffentlichungsnummer:
**WO 2016/009032 (21.01.2016 Gazette 2016/03)**

(54) **WINDENERGIEANLAGEN-ROTORBLATT, WINDENERGIEANLAGEN-ROTORBLATTSPITZENHINTERKANTE, VERFAHREN ZUM HERSTELLEN EINES WINDENERGIEANLAGEN-ROTORBLATTES UND WINDENERGIEANLAGE**

WIND-TURBINE ROTOR BLADE, TRAILING EDGE FOR WIND-TURBINE ROTOR BLADE TIP, METHOD FOR PRODUCING A WIND-TURBINE ROTOR BLADE, AND WIND TURBINE

PALE DE ROTOR D'ÉOLIENNE, BORD DE FUITE DE POINTE DE PALE DE ROTOR D'ÉOLIENNE, PROCÉDÉ DE FABRICATION D'UNE PALE DE ROTOR D'ÉOLIENNE ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2014   DE 102014213930**

(43) Veröffentlichungstag der Anmeldung:
**24.05.2017   Patentblatt 2017/21**

(73) Patentinhaber: **Wobben Properties GmbH**
**26607 Aurich (DE)**

(72) Erfinder:
• **KAMRUZZAMAN, Mohammad**
**Southampton**
**Hampshire SO19 7DG (GB)**
• **ALTMIKUS, Andree**
**26605 Aurich (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**EP-A2- 2 527 642        WO-A1-2015/016704**
**US-A1- 2009 074 585**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Herstellen eines Windenergieanlagen-Rotorblattes. Weiterhin betrifft die vorliegende Erfindung eine Hinterkante für eine Rotorblattspitze und die Erfindung betrifft ein Windenergieanlagen-Rotorblatt.

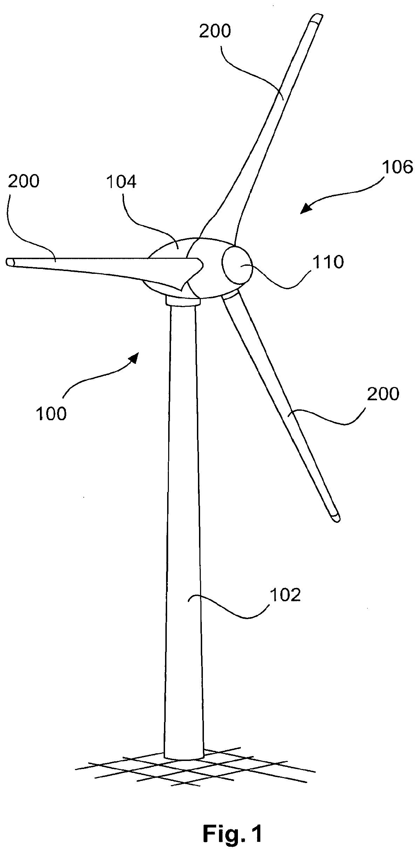

Windenergieanlagen sind allgemein bekannt und Figur 1 zeigt eine solche bekannte Windenergieanlage. Für die Effizienz der Windenergieanlage ist das Design des Rotorblatts bzw. der Rotorblätter ein wichtiger Aspekt. Auch die Ausbildung der Rotorblattspitze ist hierbei ein wichtiger Faktor. Bei der Umströmung der Rotorblattspitze werden infolge eines Druckunterschiedes zwischen der Ober- und Unterseite freie Randwirbel erzeugt, aus denen ein Widerstand resultiert. Zudem werden durch diese freien Randwirbel störende Geräusche erzeugt.

Um diese störenden Geräusche zu reduzieren sind bereits sogenannte Flügelendscheiben, im Folgenden Winglets genannt, bekannt. Unter einem Winglet ist dabei ein Anbau an den Enden eines Rotorblatts zu verstehen, der in einem vorbestimmten Winkel von der Längsachse des Rotorblatts abweicht. Durch solche Winglets kann der Widerstand und die Wirbelbildung an der Rotorblattspitze reduziert werden. Dadurch werden an den Enden der Rotorblätter, also an der Rotorblattspitze, abfallende Wirbel reduziert. Die dadurch entstehenden Geräusche werden somit ebenfalls reduziert. Die Leistung der Windenergieanlage kann gesteigert werden. Nachteilig bei solchen bekannten Winglets ist, dass diese schwierig auszulegen sind, um eine gewünschte Geräuschminderung bzw. Leistungssteigerung zu erreichen. Es besteht die Gefahr, dass ein so großer Aufwand verursacht wird, der in keinem angemessenen Verhältnis zur Wirkung steht.

In der prioritätsbegründenden deutschen Patentanmeldung hat das Deutsche Patent- und Markenamt die folgenden Dokumente recherchiert: DE 10 2008 037 368 A1, DE 10 2011 050661 A1, US 2003/0175121 A1, US 5,088,665 A, EP 1 314 885 B1, EP 0 652 367 A1 und WO 2014/086919A1.

Der vorliegenden Erfindung liegt somit die Aufgabe zugrunde, wenigstens eines der oben genannten Probleme zu adressieren. Insbesondere soll eine Lösung vorgeschlagen werden, die die Wirksamkeit eines Rotorblattes einer Windenergieanlage ohne Zunahme von Geräuscheffekten weiter steigert.Aufgabe der Erfindung ist es insbesondere, die Geräuschemission einer Windenergieanlage weiter zu verringern. Zumindest soll eine alternative Lösung geschaffen werden.

Diese Aufgabe wird durch ein Windenergieanlagen-Rotorblatt mit einer Vorderkante, einer Hinterkante, einer Rotorblattwurzel, einer Rotorblattspitze, einer Saugseite, einer Druckseite, einer Rotorblattlänge, einer Profiltiefe und einer Pitch-Drehachse gelöst. Die Rotorblattspitze ist als Winglet ausgestaltet und zur Druckseite hin abgewinkelt oder abgebogen. Die Rotorblattspitze weist eine Rotorblattspitzen-Hinterkante auf, welche wiederum eine Hinterkantenverlaufslinie aufweist, welche die Kontur der Rotorblattspitzen-Hinterkante abbildet. Die Rotorblattspitzen-Hinterkante weist eine Mehrzahl von Zacken zur Verbesserung eines Strömungsverhaltens an der Rotorblattspitzen-Hinterkante auf. Die Zacken weisen jeweils eine Zackenspitze, zwei Zackenkanten und eine Winkelhalbierende auf. Die Zackenkanten sind nichtparallel zu einer Anströmrichtung vorgesehen, welche senkrecht zur Pitch-Drehachse vorgesehen ist. Die Zackenkanten sind nichtsenkrecht auf einer Tangente an der Hinterkantenverlaufslinie angeordnet. Die Hinterkantenverlaufslinie weist eine Mehrzahl von Abschnitten auf, wobei einer der Abschnitte nichtparallel zu der Pitch-Drehachse verläuft. Die Winkelhalbierende einer Zacke steht nicht senkrecht zur Pitch-Drehachse.

Gemäß einem Aspekt der vorliegenden Erfindung ist eine Länge der zwei Zackenkanten einer Zacke ungleich und/oder ein Winkel einer Winkelhalbierenden bezogen auf eine Tangente an der Hinterkantenverlaufslinie beträgt zwischen 70 und 110 Grad.

Zur Lösung der Aufgabe wird eine Hinterkante für eine Rotorblattspitze eines aerodynamischen Rotors einer Windenergieanlage vorgeschlagen. Die Hinterkante umfasst dabei eine Hinterkantenverlaufslinie, die die Kontur der Hinterkante abbildet, und mehrere Zacken zur Verbesserung des Strömungsverhaltens an der Hinterkante. Dabei sind die Zacken in Abhängigkeit von der Hinterkantenverlaufslinie an der Hinterkante vorgesehen.

Die Rotorblattspitze weist über ihre gesamte Länge, also von der Anschlussstelle zum Rotorblatt bis zur Spitze selbst eine Hinterkante mit einer Hinterkantenverlaufslinie auf. Die Hinterkantenverlaufslinie bildet dabei die Kontur der Hinterkante ab, also die Linie, in der sich die Saug- und die Druckseite der Rotorblattspitze treffen. Insbesondere ist eine solche Hinterkantenverlaufslinie eine gekrümmte Linie. An der Hinterkantenverlaufslinie sind die mehreren Zacken nebeneinander angeordnet. Die Zacken sind dabei in Abhängigkeit von der Hinterkantenverlaufslinie vorgesehen bzw. ausgerichtet. D.h., dass die Auslegung der Zacken an der Hinterkante von der Hinterkantenverlaufslinie abhängig ist und somit von der Kontur bzw. der Geometrie der Hinterkante. Demnach werden auch Krümmungen und dergleichen bei der Ausrichtung der Zacken an der Hinterkante berücksichtigt. Dies hat den Vorteil, dass die Zacken optimal an den Hinterkantenverlauf angepasst sind und somit auftretende Wirbel verringert werden können. Dadurch werden ebenfalls die Geräuschemission und ein Leistungsabfall verringert.

Die Profile bzw. die Geometrien der Rotorblattspitzen und somit auch die Hinterkantenverlaufslinie von Rotorblattspitzen unterschiedlicher Rotorblätter verschiedener Windenergieanlagen-Typen sind unterschiedlich ausgestaltet. Insbesondere sind solche Rotorblattspitzen als sogenannten Winglets ausgestaltet um Geräuschemissionen zu reduzieren. Die Ausgestaltung ist dabei abhängig von den verschiedenen Standorten, an denen unterschiedliche Windverhältnisse wie Starkwind oder Schwachwind vorherrschen können. Dabei ist die Definition der Zacken von den Geometrie- und Betriebsparametern an der Rotorblattspitze bzw. der Windenergieanlage und somit von der Hinterkantenverlaufslinie an der Rotorblattspitze abhängig. Durch die Anordnung der Zacken abhängig von der Hinterkantenverlaufslinie, sind die Zacken individuell an das jeweilige Profil der Rotorblattspitze anpassbar. Die Geräuschemission kann somit optimal reduziert werden und die Leistung der Windenergieanlage gesteigert werden.

Vorzugsweise ist die Rotorblattspitze als Winglet ausgeführt. Ein Winglet ist dabei eine gebogene Flügelspitze, also ein Teil eines Rotorblattes, der in einem vorbestimmten Winkel von der Längsachse des Rotorblatts abweicht. Das Winglet ist dabei entweder in Richtung der Anströmung oder entgegen der Richtung der Anströmung ausgeführt. Dabei kann die Rotorblattspitze auch als zwei Winglets ausgeführt sein, die in entgegengesetzte Richtungen weisen. Ein solches Winglet reduziert die durch den Druckunterschied zwischen Ober- und Unterseite bzw. Saug- und Druckseite an der Rotorblattspitze entstehenden Wirbel, indem sie den Randwirbel zerteilen und nach außen ablenken. Dadurch wird die Geräuschemission verringert und die Leistungsaufnahme gesteigert. In Kombination mit einer gezackten Hinterkante, also einer Hinterkante mit mehreren Zacken, können diese Effekte deutlich gesteigert werden.

In einer bevorzugten Ausführungsform sind die Zacken normal zur Hinterkantenverlaufslinie angeordnet. Dabei weisen die einzelnen Zacken jeweils eine Zackenhöhe auf. Die maximale Zackenhöhe befindet sich hierbei auf einer Normalen zur Hinterkantenverlaufslinie. Solche Zacken können an der Hinterkante auftretende Turbulenzen bzw. dadurch entstehende Wirbel unterschiedlicher Größe auffangen und somit die Geräuschemission verringern. Bei einer gekrümmten Hinterkantenverlaufslinie sind die Zacken entsprechend ungleich ausgerichtet. Sie weisen somit in verschiedene Richtungen.

In einer besonders bevorzugten Ausführungsform weist jede Zacke wenigstens zwei Zackenkanten auf und die Hinterkante einen Zacken-Hinterkantenverlaufswinkel, der durch eine Zackenkante und der normal zur Hinterkantenverlaufslinie vorgesehene Anströmungsrichtung definiert ist. Dabei ist der Zacken-Hinterkantenverlaufswinkel kleiner als 90°, vorzugsweise kleiner als 60°, insbesondere kleiner als 45°. Die genannten Werte erzielen ein optimales Strömungsverhalten an der Hinterkante. Dass der Zacken-Hinterkantenverlaufswinkel normal zur Hinterkantenverlaufslinie verläuft ist eine theoretische Annahme. In der Realität kann ein solcher Zacken-Hinterkantenverlaufswinkel durchaus auch durch eine Veränderung der Anströmung größer sein, was nicht zu einem optimalen Strömungsverhalten an der Hinterkante führt. Durch die Ausrichtung der Zacken mit einem Zacken-Hinterkantenverlaufswinkel kleiner als 90°, insbesondere kleiner als 45°, können solche Änderungen in der Anströmrichtung aber ausgeglichen werden, so dass dies kaum Einfluss auf die Geräuschentwicklung und/oder Leistung der Windenergieanlage nimmt.

In einer bevorzugten Ausführungsform ist der Zacken-Hinterkantenverlaufswinkel entlang einer Länge der Rotorblattspitze variabel, wobei die Länge als Länge von dem Anschluss an das Rotorblatt bis zur eigentlichen Spitze definiert ist. D.h., der Winkel zwischen einer Zackenkante und der Anströmrichtung, die normal zur Hinterkantenverlaufslinie vorgesehen ist, ist nicht nur auf einen Wert beschränkt. Vielmehr können sich beispielsweise im Anschlussbereich an das Rotorblatt andere Werte für den Zacken-Hinterkantenverlaufswinkel ergeben als im Bereich der Rotorblattspitze. Somit kann ein optimales Strömungsverhalten erzielt werden.

In einer bevorzugten Ausführungsform weist die Rotorblattspitze bzw. das gesamte Rotorblatt eine Pitch-Achse auf und die Zacken sind normal zu der Pitch-Achse angeordnet. Unter der Pitch-Achse des Rotorblattes ist dabei die Achse zu verstehen, um die der Anstellwinkel, also der Pitch, der Rotorblätter verstellt wird. Der Anstellwinkel oder PitchWinkel wird verstellt, um die Leistung der Windenergieanlage zu regeln und bei wechselnden Windgeschwindigkeiten jeweils einen optimalen Wirkungsgrad der Windenergieanlage zu erreichen. Die Rotorblattspitze wird dabei ebenfalls um eine solche Pitch-Achse verstellt. Es wird theoretisch angenommen, dass sich die Anströmung normal zu dieser Pitch-Achse bzw. Anstellachse verhält. Eine Ausrichtung der Zacken entsprechend der Pitch-Achse bewirkt eine Reduktion der Wirbel und somit eine Geräuschminderung.

Vorzugsweise weist die Hinterkante einen Zacken-Pitchwinkel auf, der an einer vorgegebenen Position auf der Hinterkantenverlaufslinie durch eine Tangente definiert ist. Die Hinterkantenverlaufslinie weist für jede Position entlang der Länge der Rotorblattspitze verschiedene Punkte auf. Das Anlegen einer Tagente in den jeweiligen Punkt ergibt viele verschiedene Tangenten und somit verschiedene Zacken-Pitchwinkel entlang der Länge der Rotorblattspitze. Der Winkel zwischen der Pitch-Achse und der jeweiligen Tangente definiert den Zacken-Pitchwinkel. Dieser ist somit ebenfalls in Abhängigkeit der Hinterkantenverlaufslinie berechnet. Durch die Anpassung an die Hinterkantenverlaufslinie können auftretende Wirbel reduziert werden, wodurch auch die Geräuschemission verringert wird.

Vorzugsweise sind die mehreren Zacken und/oder Zackenkanten entlang einer bzw. der Länge der Rotorblattspitze an der Hinterkante unsymmetrisch angeordnet. Dadurch, dass die Hinterkantenverlaufslinie eine gekrümmte Form aufweisen kann und die Zacken abhängig von der Hinterkantenverlaufslinie ausgerichtet sind, sind die Zacken an verschiedenen Positionen entlang der Rotorblattlänge verschieden ausgerichtet und somit nicht symmetrisch, also die einzelnen Zackenkanten weisen nicht denselben Winkel zur Hinterkantenver-

laufslinie bzw. Anströmung auf. Insbesondere die zwei Zackenkanten einer Zacke können dabei im Verhältnis zu der Anströmung verschiedene Winkel aufweisen. Dadurch können Wirbel unterschiedlicher Größe und Art reduziert werden.

In einer besonders bevorzugten Ausführungsform verläuft die Hinterkantenverlaufslinie zumindest teilweise über die Länge der Rotorblattspitze gekrümmt, also nicht gerade. Da aerodynamische Profile - wie die Profile einer erfindungsgemäßen Rotorblattspitze - eine sehr komplexe Geometrie zur Erzielung der optimalen Leistung aufweisen, ist es teilweise notwendig, dass die Hinterkantenverlaufslinie an einigen Stellen entlang der Länge der Rotorblattspitze nicht gerade, also gekrümmt verlaufen. Dadurch, dass die Zacken an die Hinterkantenverlaufslinie angepasst sind bzw. abhängig davon berechnet sind, wird eine solche Krümmung mit berücksichtigt. Die Rotorblattspitze kann somit hinsichtlich ihres Profils und der optimalen Anordnung der Zacken an der Hinterkante bzw. der Zackengeometrie ausgelegt werden.

Vorzugsweise weist das Rotorblatt einen Anschlussbereich an das Rotorblatt und einen Spitzenbereich auf, wobei der Zacken-Hinterkantenverlaufswinkel bei den Zackenkanten, die zum Anschlussbereich zeigen, von dem Anschlussbereich zum Spitzenbereich zunimmt und/oder bei den Zacken, die von dem Anschlussbereich wegzeigen, von dem Anschlussbereich zum Spitzenbereich abnimmt. D.h., der Zacken-Hinterkantenverlaufswinkel verringert sich einerseits auf der Seite der Zacken, die in Richtung des Spitzenbereichs zeigen und erhöht sich andererseits auf der Seite der Zacken, die dem Anschlussbereich zugewandt sind. Unter dem Spitzenbereich wird dabei vorliegend der Bereich der Rotorblattspitze verstanden, der dem Anschlussbereich gegenüber liegt.

Da aufgrund der verschiedenen Anströmbedingungen, wie Reynoldzahl, Machzahl, Anstellwinkel usw. an der Rotorblattwurzel und der Rotorblattspitze auftreten, werden nahe der Hinterkante Wirbel in verschiedenen Größen erzeugt. Für große Wirbel sind beispielsweise große Zacken-Hinterkantenverlaufswinkel effektiv und für kleine Wirbel kleine Zacken-Hinterkantenverlaufswinkel. Durch die erfindungsgemäße Anordnung können somit die kleinen und die großen Wirbel abgedeckt werden. Zudem weist eine solche Anordnung bei mittel großen Wirbeln zumindest eine durchschnittlich gute Effektivität auf.

Zudem wird zur Lösung der Aufgabe eine Rotorblattspitze für ein Rotorblatt für eine Windenergieanlage vorgeschlagen, wobei die Rotorblattspitze wenigstens eine Hinterkante gemäß einer der vorstehenden Ausführungsformen aufweist. Es ergeben sich somit die Zusammenhänge, Erläuterungen und Vorteile gemäß wenigstens einer Ausführungsform der beschriebenen Hinterkante.

Eine solche Rotorblattspitze ist dabei insbesondere für ein Rotorblatt eines Luvläufers mit aktiver Blattverstellung vorgesehen. Die Rotorblattspitze kann dabei bei Windenergieanlagen aller Leistungsklassen, insbesondere in einem Megawatt-Bereich verwendet werden.

Weiterhin wird eine Windenergieanlage mit wenigstens einem Rotorblatt mit einer erfindungsgemäßen Rotorblattspitze, vorzugsweise mit drei Rotorblättern, jeweils mit einer erfindungsgemäßen Rotorblattspitze vorgeschlagen.

Ferner wird ein Verfahren zum Berechnen einer Zackengeometrie an einer Hinterkante einer Rotorblattspitze eines Rotorblatts eines aerodynamischen Rotors einer Windnenergieanlage vorgeschlagen. Dabei weist die Hinterkante eine Hinterkantenverlaufslinie auf, die die Kontur der Hinterkante abbildet, und die Zackengeometrie wird in Abhängigkeit von der Hinterkantenverlaufslinie berechnet. Jede Zacke weist dabei eine Zackenhöhe, Zackenbreite und wenigstens zwei Zackenkanten auf. Die Zackenkanten verlaufen dabei von der Zackenbreite zur Zackenspitze. Sie können sich in der Zackenspitze berühren oder alternativ kann die Zackenspitze auch rund oder mit einer weiteren Kante ausgeführt sein. Die Zackengeometrie wird durch das vorliegende Verfahren insbesondere über die Anordnung der Zackenkanten zu der Hinterkantenverlaufslinie definiert.

Es ergeben sich somit die Zusammenhänge, Erläuterungen und Vorteile gemäß wenigstens einer Ausführungsform der beschriebenen Hinterkante.

Vorzugsweise wird bei dem erfindungsgemäßen Verfahren

- die lokale Anströmung als Normale zu dem Hinterkantenverlauf angenommen und/oder

- ein Zacken-Hinterkantenverlaufswinkel, der durch die Anströmung und eine Zackenkante definiert ist, berechnet,

wobei der Zacken-Hinterkantenverlaufswinkel kleiner als 90° ist, vorzugsweise kleiner als 60°, insbesondere kleiner als 45°.

In einer bevorzugten Ausführungsform wird bei einem erfindungsgemäßen Verfahren

- die Anströmungsrichtung als normal zur Pitch-Achse des Rotorblatts angenommen und/oder

- mehrere Zacken werden normal zur Pitch-Achse ausgerichtet,

wobei ein Zacken-Pitchwinkel berechnet wird, der zwischen der Pitch-Achse und einer Zackenkante dem Winkel einer Tangente an einer Position der Hinterkante entspricht.

Die Hinterkantenverlaufslinie weist für jede Position entlang der Länge der Rotorblattspitze verschiedene Punkte auf. Das Anlegen einer Tangente in den jeweiligen Punkt ergibt viele verschiedene Tangenten und somit verschiedene Zacken-Pitchwinkel entlang der Länge der Rotorblattspitze. Der Winkel zwischen der Pitch-Achse und der jeweiligen Tangente definiert den Zacken-Pitchwinkel. Dieser ist somit ebenfalls in Abhängigkeit der Hinterkantenverlaufslinie berechnet. Durch die Anpassung an die Hinterkantenverlaufslinie können auftretende Wirbel reduziert werden, wodurch auch die Geräuschemission verringert wird.

In einer bevorzugten Ausführungsform wird das Verfahren zum Berechnen einer Zackengeometrie für eine Hinterkante nach wenigstens einer der vorher beschriebenen Ausführungsformen verwendet.

Den Berechnungen liegen dabei folgende Überlegungen zugrunde.

Die Strouhal-Zahl ist sehr viel kleiner als 1. Die Strouhal-Zahl ist dabei eine dimensionslose Kenngröße der Aerodynamik, mit der bei instationärer Strömung die Ablösefrequenz von Wirbeln beschrieben werden kann. Die Strouhal-Zahl wird unter anderem von der Zackenhöhe beeinflusst. Für die Zackenhöhe ergibt sich dabei der folgende Zusammenhang:

$$H\left(\frac{r}{R}\right) = 2h = c2 \cdot \Lambda_{p3}\left(\frac{r}{R}\right)$$

C2 ist dabei gleich 2 bis 15 und eine Konstante. Die Zackenhöhe berechnet sich somit aus der Kohärenzlängenskala $\Lambda_{p3}$ der turbulenten Druckfluktuation unter der Verwendung eines konstanten Faktors c2. Der Faktor c2 kann empirisch ermittelt werden, bspw. aus Testmessungen oder aus Erfahrungswerten.

Das Verhältnis der Zackenhöhe zu der Zackenbreite wird als $\frac{H}{\lambda} > 0{,}5$ angenommen, wobei $\lambda = H/c3$ ist und c3 = 0,5 bis 6 eine empirische Konstante ist.

Der Winkel zwischen der lokalen Anströmrichtung und der Zackenkante, also der Zacken-Hinterkantenverlaufswinkel ist $\Phi_i < 90°$. Dabei wird vorausgesetzt, dass die Anströmung normal zu der Pitch-Achse des Rotorblatts ist, vorliegend also $\Phi_i = \Phi \pm \theta_i$. Wobei $\theta_i$ der Zacken-Pitchwinkel ist. Dabei variiert der Zacken-Pitchwinkel $\theta_i$ entlang der Länge der Rotorblattspitze abhängig von dem Hinterkantenverlauf.

Nachfolgend wird die Erfindung exemplarisch anhand von Ausführungsbeispielen unter Bezugnahme auf die begleitenden Figuren näher erläutert.

Figur 1    zeigt eine Windenergieanlage schematisch in einer perspektivischen Ansicht.

Figur 2    zeigt schematisch einen Rotorblattabschnitt mit einer Rotorblattspitze mit einer Hinterkante mit einem gezackten Verlauf gemäß einem ersten Ausführungsbeispiel.

Figur 3    zeigt schematisch eine Rotorblattspitze mit einer Hinterkante mit einem gezackten Verlauf.

Figur 4    zeigt einen vergrößerten Ausschnitt der Rotorblattspitze aus Figur 3.

Figur 5    zeigt einen weiteren vergrößerten Ausschnitt der Rotorblattspitze der Figur 3.

Figur 6    zeigt schematisch eine Rotorblattspitze mit zwei verschiedenen Zackengeometrien an der Hinterkante.

Figur 7    zeigt einen vergrößerten Ausschnitt der Rotorblattspitze aus Figur 6.

Figur 8    zeigt schematisch eine Rotorblattspitze.

Figur 9    zeigt eine schematische Darstellung eines Ausschnitts eines Rotorblatts gemäß einem zweiten Ausführungsbeispiel.

Es ist zu beachten, dass gleiche Bezugszeichen eventuell ähnliche, aber nicht identische Elemente auch unterschiedlicher Ausführungsformen bezeichnen können.

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht beispielsweise Figur 1 eine Windenergieanlage als solche schematisch, so dass die vorgesehene zackenförmige Hinterkante an der Rotorblattspitze sowie die Winglet-Form der Rotorblattspitze nicht eindeutig erkennbar ist.

Figur 1 zeigt eine Windenergieanlage 100 mit einem Turm 102 und einer Gondel 104. An der Gondel 104 ist ein Rotor 106 mit drei Rotorblättern 200 und einem Spinner 110 angeordnet. Der Rotor 106 wird im Betrieb durch den Wind in eine Drehbewegung versetzt und treibt dadurch einen Generator in der Gondel 104 an. Der Pitch des Rotorblattes ist z. B. jeweils durch einen Pitchantrieb einstellbar.

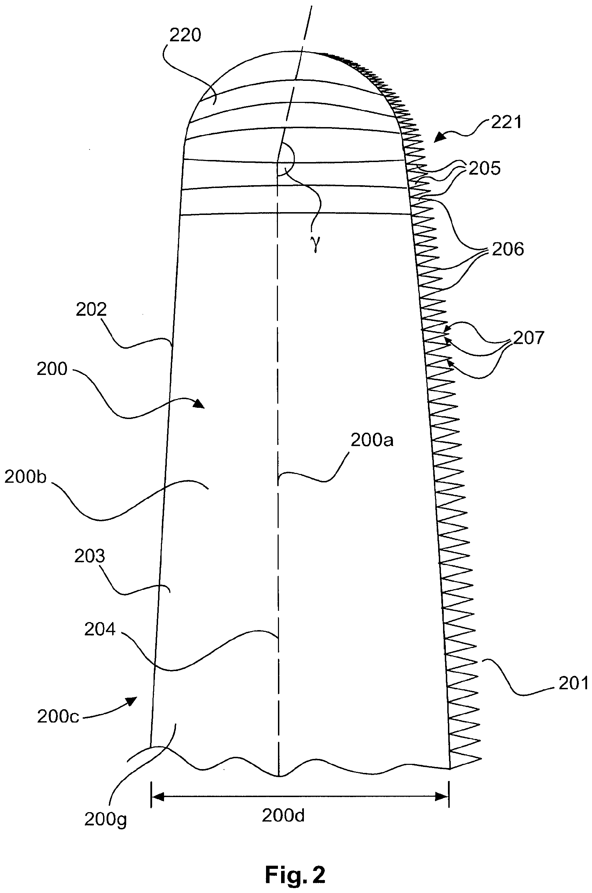

Figur 2 zeigt schematisch einen Ausschnitt eines Rotorblattabschnitts 203 mit einer Rotorblattspitze 220 mit einer Rotorblatthinterkante 221, die vereinfachend auch als Hinterkante bezeichnet wird. Die Rotorblattspitze 220 führt von einem Rotorblattabschnitt 203 mit einem Winkel γ, bezogen auf die Längsachse 204 des Rotorblattabschnitts 203 bzw. einer Pitch-Drehachse, in eine von der Längsachse 204 abweichende Richtung. Das Rotorblatt 200 weist eine Pitch-Drehachse 200a auf. Die Pitch-Drehachse 200a ist die Drehachse des Rotorblattes, wenn der Pitch des Rotorblattes verstellt wird. Das Rotorblatt 200 weist eine Saugseite 200b, eine Druckseite 200c, eine Vorderkante 202 und eine Hinterkante 201 auf. Das Rotorblatt 200 weist eine Profiltiefe 200d auf, welche entlang der Länge L des Rotorblattes (zur Rotorblattspitze hin) abnehmen kann.

Das Rotorblatt 200 weist eine Außenschale 200g unter anderem mit einem Faserverbundwerkstoff wie z. B. GFK (glasfaserverstärkter Kunststoff) oder CFK (kohlenfaserverstärkter Kunststoff) auf. Zusätzlich können Stege zwischen der Saugseite und der Druckseite vorgesehen sein.

Bei der Rotorblattspitze 220 handelt es sich somit um ein sog. Winglet, welches zur Druckseite 200c hin gebogen oder abgewinkelt ist. An der Rotorblattspitze 220 ist eine Hinterkante 221 vorgesehen, die einen gezackten Verlauf mit mehreren Zacken 205 aufweist, die entlang der Rotorblattspitze 220 und des Rotorblattabschnitts 203 nebeneinander angeordnet sind. Jede Zacke 205 weist jeweils eine Zackenspitze 206 auf sowie zwei Zackenkanten 207, die sich in der Zackenspitze 206 berühren. Jeweils eine Seite einer Zackenkante 207 berührt ebenfalls eine benachbarte Zackenkante 207 und berührt auf der entgegengesetzten Seite, also im Bereich der Zackenspitze 206 wieder die zweite zu der jeweiligen Zacke 205 gehörigen Zackenkante 207 usw. Es sei angemerkt, dass der dargestellte Ausschnitt der Rotorblattspitze 220 nur ein Ausführungsbeispiel ist. Die Zacken 205 können alternativ nur in einem Abschnitt der Rotorblattspitze 220 oder nur an der Rotorblattspitze 220 vorgesehen sein. Ferner ist es möglich, dass die Zacken 205 auch weiter über die Hinterkante des gesamten Rotorblatts verlaufen.

Die Hinterkante 201 des Rotorblattes ist (entlang der Länge L des Rotorblattes) nicht gerade, sondern weist eine Mehrzahl von Abschnitten auf, welche unterschiedlich zur Pitch-Drehachse 200a ausgerichtet sein können. Die Rotorblattspitze 220 ist als Winglet ausgestaltet und ist zur Druckseite 200c hin abgewinkelt oder gebogen.

Gemäß der Erfindung kann eine Hinterkante der Rotorblattspitze mit einer Mehrzahl von Zacken als ein separates Teil ausgestaltet sein. Damit kann ein Hinterkantenabschnitt mit einer Mehrzahl von Zacken auch bei einem bestehenden Rotorblatt nachgerüstet werden. Ferner kann dieser Hinterkantenabschnitt (der Rotorblattspitze) separat hergestellt werden, um während der Produktion des Rotorblatts an der Hinterkante befestigt zu werden. Dazu kann es möglich sein, dass ein Abschnitt oder Ausschnitt aus der Hinterkante des bereits hergestellten Rotorblattes entfernt, herausgesägt oder herausgetrennt werden muss.

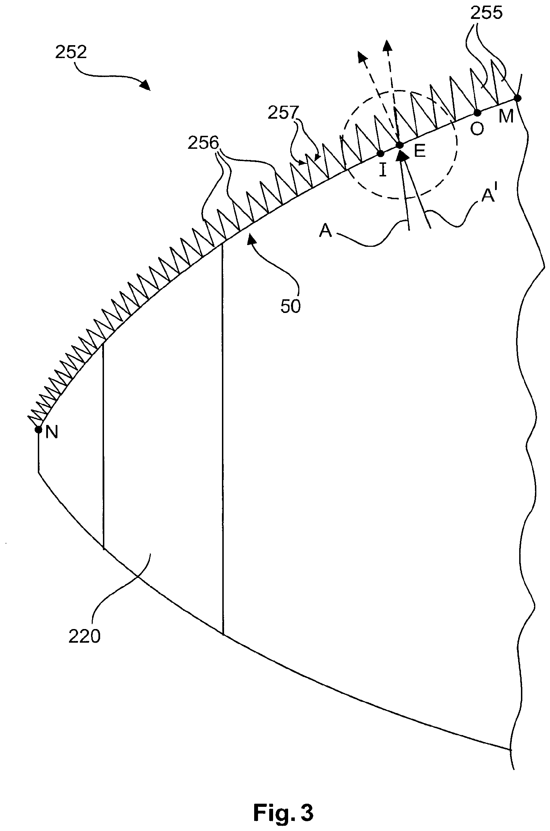

Figur 3 zeigt eine Hinterkantenverlaufslinie, die im Folgenden auch einfach als Hinterkantenverlauf 250 bezeichnet wird, einer Rotorblattspitze 252 wie sie beispielsweise in Figur 2 abgebildet ist. Die Kurve MOEN kennzeichnet den Hinterkantenverlauf 250 der Rotorblattspitze 252 an verschiedenen radialen Positionen des Rotorblatts, also entlang der Spannweite des Rotorblatts. In Figur 3 sind mehrere Zacken 255 zu erkennen, die jeweils eine Zackenspitze 256 und zwei Zackenkanten 257 aufweisen. Die Größe der Zacken 255 nimmt ausgehend von Punkt M bis zum Punkt N ab. Die Zacken 255 sind über den gesamten Hinterkantenverlauf 250 der Rotorblattspitze 252 angeordnet.

In Figur 3 ist zudem die Richtung der lokalen Anströmung A' und A zu erkennen. Die lokale Anströmungsrichtung A' und A unterscheidet sich durch zwei verschiedene Annahmen. Bei der lokalen Anströmungsrichtung A' wird angenommen, dass sie normal zu der Hinterkante verläuft. Die lokale Anströmungsrichtung A ist normal zu der Pitch-Achse des Rotorblatts vorgesehen.

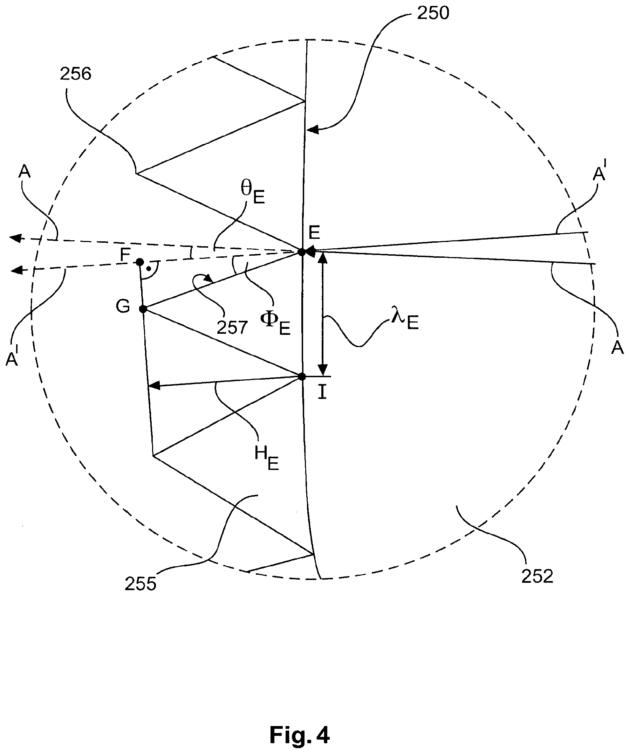

Figur 4 zeigt einen vergrößerten Ausschnitt der Rotorblattspitze 252 aus Figur 3. Entlang des Hinterkantenverlaufs 250 sind mehrere Zacken 255 angeordnet, die jeweils eine Zackenspitze 256 sowie jeweils zwei Zackenkanten 257 aufweisen. Zudem weisen die Zacken 255 eine Zackenhöhe H sowie eine Zackenbreite λ auf. Die Zackenkante 257 bildet an dem Punkt E gemeinsam mit der lokalen Anströmungsrichtung A' einen Zacken-Hinterkantenverlaufswinkel $\Phi_E$. Für eine gegebene Definition der Zackenhöhe $H_E$ und Weite $\lambda_E$ an dem Punkt E kann der Zacken-Hinterkantenverlaufswinkel $\Phi_E$ errechnet werden. Aus dem Dreieck EFG in Figur 4 ergibt sich:

$$\tan(\Phi_E) = \frac{\lambda_E/2}{H_E} = \frac{\lambda_E}{2H_E}$$

und mit

$$\frac{H_E}{\lambda_E} = 2 \text{ folgt}$$

$$\tan(\Phi_E) = \frac{\lambda_E}{2H_E} = \frac{1}{4}.$$

Daraus folgt

$$\Phi_E = 14,03°.$$

Wenn somit entlang der gesamten Länge der Rotorblattspitze das Verhältnis $H_E/\lambda_E = 2$ konstant bleibt, bleibt $\Phi_E = 14,03$ ebenfalls konstant. Es hat sich gezeigt, dass die maximale Lärmreduktion erzielt werden kann, wenn der Winkel zwischen der Hauptanströmungsrichtung und der Zackenkante (bzw. Linie EG in Fig. 4) weniger als 90°, insbesondere weniger als 45° ist. Somit liegt der für Figur 3 berechnete Zacken-Hinterkantenverlaufswinkel $\Phi_E$ in dem genannten Bereich. Es ist ebenfalls möglich, den Zacken-Hinterkantenverlaufswinkel $\Phi$ zu variieren, z.B. durch die Variation des Verhältnisses

von $H/\lambda$ oder der Anströmungsrichtung. Bei der Variation von $H/\lambda = [0.5,1,2,4,6,8]$ und der Annahme, dass die Anströmungsrichtung konstant ist, würde für $\Phi$ die folgenden Werte ergeben: 45; 26,56; 14,03; 7,12; 4,76; 3,57 Grad. Dies setzt voraus, dass die Anströmungsrichtung unverändert bleibt. Die lokale Strömungsrichtung variiert aber bei Betrieb der Windenergieanlage.

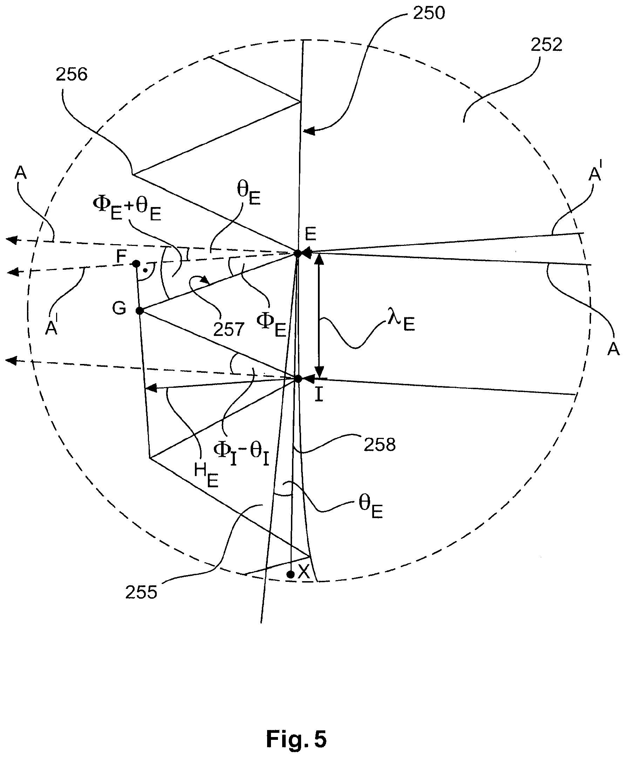

Daher wird eine Beziehung zwischen der Line A'E und AE hergestellt. Dies erlaubt eine Verteilung von nicht-symmetrischen Zackengeometrien, in denen der Zacken-Hinterkantenverlaufswinkel $\Phi$ entlang der Spannweite der Rotorblattspitze variiert. Figur 5 zeigt dabei einen vergrößerten Ausschnitt der Rotorblattspitze 52 mit dem Hinterkantenverlauf 250 aus Figur 4.

Zusätzlich zu Figur 4 zeigt Figur 5 eine durch den Punkt E durchgehende Tangente 258. Die Zacken 255 sind normal zur Hinterkante ausgerichtet. Die normale zu der Hinterkante erzeugt einen Zacken-Pitchwinkel $\theta_E$ mit der Anströmungsrichtung normal zur Pitch-Achse. Der Zacken-Pitchwinkel $\theta_E$ wird über die Tangente an dem Punkt E (Linie XE, 58) ermittelt. Wenn die Tangente 258 an jeder Position der Hinterkante 250 verschieden ist, variiert der Zacken-Pitchwinkel $\theta_E$ vom Beginn der Rotorblattspitze 252 bis zum Ende der Rotorblattspitze 252 bzw. von der Rotorblattwurzel bis hin zur Rotorblattspitze abhängig von dem jeweiligen Hinterkantenverlauf. Es kann aus Figur 5, insbesondere an den Positionen E und I, erkannt werden, dass der Winkel zwischen der lokalen Anströmungsrichtung und den Zackenkanten 257 sich aus $\Phi_E + \theta_E$ bzw. $\Phi_I - \theta_I$ berechnet. Die Zackenkanten 257 sind nicht symmetrisch über die Anströmungsrichtungslinie AE, weil der Winkel $\Phi + \theta_E$ nicht identisch zu dem Winkel $\Phi - \theta_I$ ist. Dies zeigt an, dass der lokale Anströmungswinkel zwischen der Anströmungsrichtung und der Zackenkante 257 an dem Punkt E und an dem Punkt I nicht identisch sein wird. Dies gilt nur, wenn die lokale Anströmungsrichtung normal zu der Pitch-Achse 200a wie in Figur 4 ist.

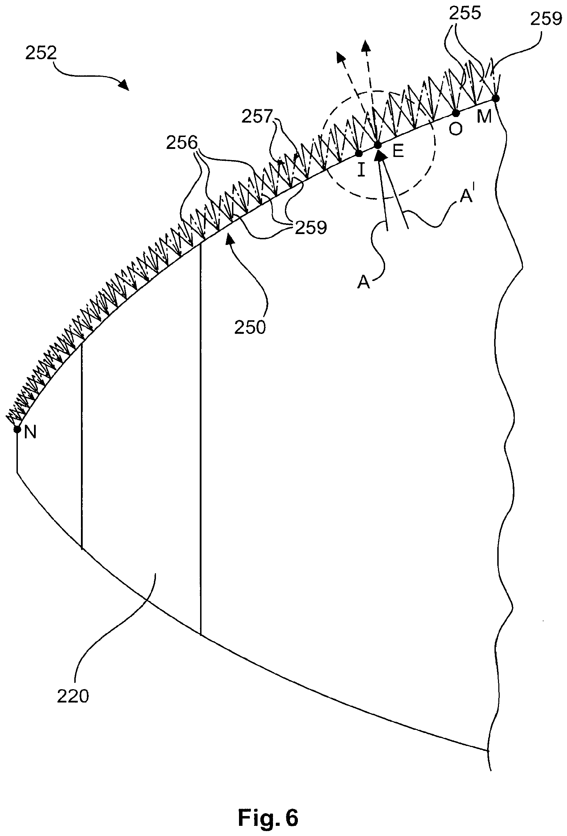

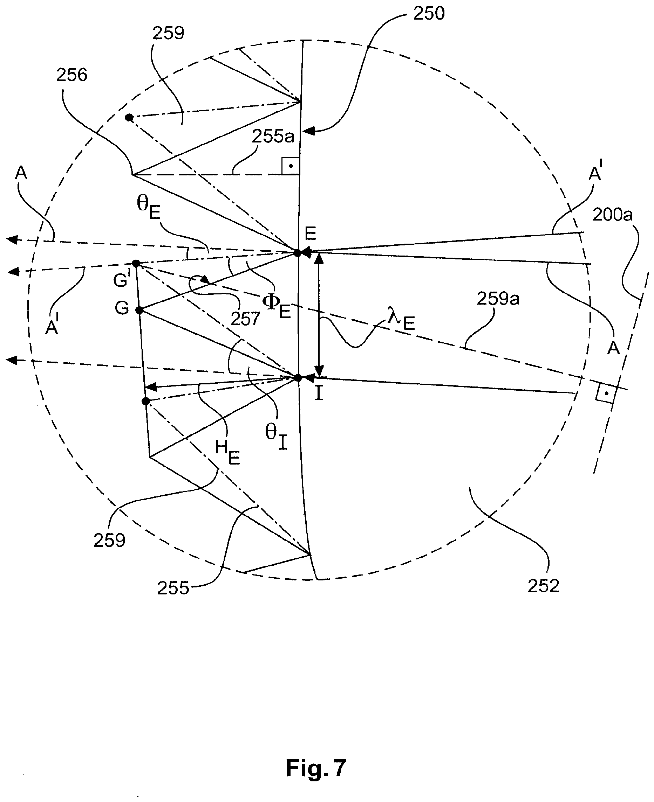

Die exakte lokale Anströmungsrichtung ist allerdings immer unbekannt. Sie kann bestenfalls durch eine Annahme angenähert werden. Daher ist es ebenfalls möglich, die Zackengeometrie derart zu ändern, dass ein optimales $\Phi$ und $H/\lambda$ erzielt wird. Figur 6 zeigt dabei schematisch einen Ausschnitt einer Rotorblattspitze 252 mit zwei verschiedenen Zackengeometrien. Die erste Geometrie, nämlich die Zacken 255 werden normal zu der Hinterkante der Rotorblattspitze 252 ausgerichtet. Die zweite Geometrie, nämlich die Zacken 259 werden normal zu der Pitch-Achse des Rotorblatts ausgerichtet. Die Zacken 259 sind dabei als strichpunktierte Linie abgebildet. Für diesen Fall ist der Winkel zwischen der Anströmungsrichtung und der Zackenkante an Punkt E und I $\theta_E$ bzw. $\theta_I$. Die Zackengeometrie wird über eine Koordinatentransformation der Zackendaten von den Zacken, die normal zur Hinterkante angeordnet sind, durchgeführt. Dies ist schematisch in dem vergrößerten Ausschnitt der Rotorblattblattspitze 252 in Figur 7 zu erkennen.

Geräuschfeldermessungen wurden für drei Rotorblattkonfigurationen durchgeführt: 1. für ein Rotorblatt ohne Zacken, 2. für ein Rotorblatt mit Zacken, die normal zur Rotorblatthinterkante ausgerichtet sind und 3. für ein Rotorblatt mit Zacken, die normal zur Pitch-Achse ausgerichtet sind. Die Daten haben ergeben, dass die jeweiligen Rotorblätter mit den Zacken an der Rotorblattspitze geräuschärmer waren als die Rotorblätter ohne Zacken an der Rotorblattspitze. Besonders bevorzugt ist zudem die Ausrichtung der Zacken abhängig von dem Hinterkantenverlauf der Rotorblattspitze. Diese Anordnung erzielt besonders gute Geräuschreduzierungen beispielsweise bei Zunahme, insbesondere in radialer Position $i = 1,3,5...N-1$, und Abnahme, insbesondere in radialer Position $i = 2,4,6,...N$, des Zacken-Hinterkantenverlaufswinkels $\Phi_i$ entlang der Spannweite. Dies resultiert daher, dass aufgrund verschiedener lokaler Anströmungsbedingungen wie verschiedene Reynoldszahlen, Machzahlen und Anstellwinkel an den verschiedenen Positionen der Rotorblattspitze verschieden große Wirbel nahe der Hinterkante erzeugt werden, d.h. für größere turbulente Wirbel sind Zacken mit einem $\Phi_i$ effektiver, wie beispielsweise am Punkt E $i = 17$ als kleinere Winkel. Für kleinere Wirbel sind Zacken mit kleinem $\Phi_i$, z.B. am Punkt I, $i = 18$, effektiver als Zacken mit einem großen Winkel. Andererseits sind für mittelgroße Wirbel beide Zackengeometrien effektiv. Für optimale Ergebnisse sollten zudem die folgenden Bedingungen erfüllt sein:

I. Die Strouhal-Zahl $\omega h/U_c$ >> 1, wobei

$$H\left(\frac{r}{R}\right) = 2h = c2 \cdot \Lambda_{p3}\left(\frac{r}{R}\right)$$ ist, und c2 = 2 bis 15 eine Konstante ist,

II. Länge zu Weiteverhältnis $\frac{H}{\lambda} > 0,5$, wobei $\lambda = H/c3$ ist und c3 = 0,5 bis 6 eine empirische Konstante ist,

III. der Zacken-Hinterkantenverlaufswinkel zwischen der lokalen Anströmrichtung und der Zackenkante $\Phi_i < 90°$, dabei wird vorausgesetzt, dass die Anströmung normal zu der Pitch-Achse des Rotorblatts ist, vorliegend also $\Phi_i = \Phi \pm \theta_i$ gemäß Figur 5. Dabei variiert der Zacken-Pitchwinkel $\theta_i$ entlang der Spannweite abhängig von dem Hinterkantenverlauf.

Figur 7 zeigt einen vergrößerten Ausschnitt 252 des Rotorblatts 200 und insbesondere einen Ausschnitt oder Abschnitt an der Rotorblattspitze. Die Zackengeometrie wird über eine Koordinatentransformation der Zackendaten von den Zacken, die normal zur Hinterkante angeordnet sind, durchgeführt.

In Figur 7 sind somit zum einen die Zacken 255 mit den Zackenspitzen 256 und den Zackenkanten 257 gezeigt, wobei eine Winkelhalbierende 255a-255e dieser Zacken senkrecht auf der Hinterkantenverlaufslinie 250 steht. Eine Winkelhalbierende 259a der Zacken 259 steht senkrecht auf der Pitch-Drehachse bzw. der Pitch-Achse 200a.

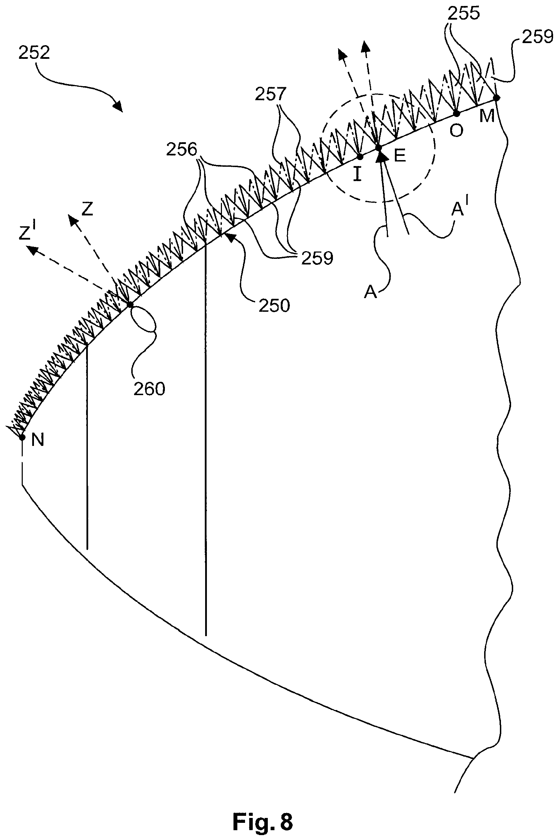

Figur 8 zeigt zusätzlich zu Figur 6 eine Turbulenz bzw. eine Wirbel 260, der sich der Hinterkante nähert. Nach den theoretischen Annahmen würde sich die Turbulenz 260 weiter in Richtung Z bewegen. In Realität würde die Turbulenz 260 sich jedoch weiter in Richtung Z' bewegen. Eine solche Turbulenz ist dabei ein unerwartetes, unstetiges aerodynamisches Phänomen, das in der Realität durchaus auftreten kann. In solchen Situationen wird die Bedingung $\Phi_i < 90°$ gestört. Die dargestellten Zacken 255 und 259 können aber auch solche Turbulenzen 260 ausgleichen und reduzieren somit auch noch im Falle einer solchen Turbulenz 260 die Geräuschentwicklung am Rotorblatt, insbesondere an der Rotorblattspitze 252.

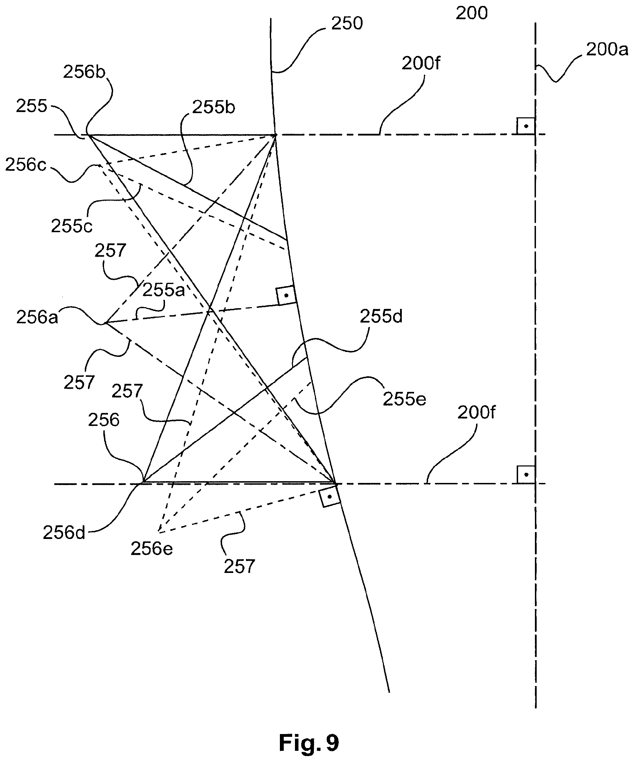

Figur 9 zeigt eine schematische Darstellung eines Ausschnitts eines Rotorblatts gemäß einem zweiten Ausführungsbeispiel der Erfindung. Das Rotorblatt 200 weist eine Pitch-Drehachse 200a und einen Hinterkantenverlauf 250 insbesondere der Rotorblattspitze auf. Des Weiteren weist das Rotorblatt 200 eine Mehrzahl von Zacken 255 an dem Hinterkantenverlauf 250 auf. Die Zacken 255 weisen jeweils eine Zackenspitze 256 sowie zwei Zackenkanten 257 und eine Winkelhalbierende 255a auf.

In Figur 9 sind beispielhaft fünf verschiedene mögliche Zackengeometrien gezeigt. Diese Zacke 255 weisen jeweils eine Zackenspitze 256a-256e auf. Jede der Zacken 255 weist ferner eine Winkelhalbierende 255a-255e auf. Ferner ist eine Anströmrichtung 200f, dargestellt, welche senkrecht auf der Pitch-Drehachse 200a steht. Das Rotorblatt 200 gemäß dem zweiten Ausführungsbeispiel kann auf einem Rotorblatt gemäß dem ersten Ausführungsbeispiel basieren und betrifft ein Rotorblatt (mit einer gebogenen oder abgewinkelten Rotorblattspitze), welches eine Zackengeometrie aufweist, wobei die Winkelhalbierenden 255a-255e beispielsweise senkrecht auf einer Tangente an der Hinterkante 250 vorgesehen ist. Die Zackengeometrie gemäß dem zweiten Ausführungsbeispiel betrifft einen Geometriebereich, wobei die Extremfälle die Zacken 255 mit den Zackenspitzen 256b und 256d darstellen, die jedoch nicht in dem erfindungsgemäßen Geometriebereich enthalten sind. Bei diesen beiden Extremfällen ist eine der Zackenkante 257 parallel zu der Anströmrichtung 200b, 200c ausgerichtet.

Gemäß der Erfindung kann die Winkelhalbierende 255a optional im Wesentlichen senkrecht auf dem Hinterkantenverlauf 250 der Rotorblattspitze, insbesondere kann der Winkel zwischen der Winkelhalbierenden der Zacken und dem Hinterkantenverlauf zwischen 70 und 110 Grad betragen.

Gemäß der Erfindung ist die Ausrichtung der Flanken der Zacken ein wichtiger Parameter. Dadurch, dass der Hinterkantenverlauf des erfindungsgemäßen Rotorblattes nicht gerade ist, hat dies auch Auswirkungen auf die Geometrie der Zacken.

Das Vorsehen der Zacken an der Rotorblatthinterkante kann dazu führen, dass der Abströmungsvektor anders ausgerichtet ist als der Anströmungsvektor. Dies kann insbesondere im Bereich der Rotorblattspitze relevant werden, weil im Bereich des äußeren Abschnitts bzw. Durchmessers des Rotorblattes sich der Hinterkantenverlauf entlang der Länge des Rotorblattes stärker ändert. Aufgrund von Zentrifugaleffekten kann es dazu kommen, dass die Anströmung nicht mehr zweidimensional, sondern dreidimensional ist.

Gemäß der Erfindung können die Zacken so ausgestaltet sein, dass die Zackenspitzen außermittig vorgesehen sind.

Gemäß der Erfindung können die Zacken zumindest abschnittsweise entlang der Länge des Rotorblattes so ausgestaltet sein, dass die Zacken nicht symmetrisch sind bzw., dass die beiden Zackenkanten 257 nicht die gleiche Länge aufweisen.

Gemäß einem Aspekt der vorliegenden Erfindung steht die Winkelhalbierende, welche durch die Zackenspitze verläuft, senkrecht auf einer Tangente an der Hinterkante. Alternativ bzw. zusätzlich dazu kann die Länge der Zackenkanten 257 einer Zacke unterschiedlich sein, so dass die Zacke nicht symmetrisch ausgestaltet ist.

Die Erfindung betrifft ein Windenergieanlagen-Rotorblatt mit einer Rotorblattspitze, welche als Winglet ausgestaltet ist und zur Druckseite hin abgewinkelt oder gebogen ist. Die Rotorblattspitze weist einen Hinterkantenabschnitt auf, welcher eine Mehrzahl von Zacken aufweist, welche jeweils eine Zackenspitze, zwei Zackenkanten und eine Winkelhalbierende aufweist. Der Hinterkantenabschnitt kann separat gefertigt sein oder zusammen mit dem Rest des Rotorblatts gefertigt werden. Die Winkelhalbierenden mindestens einer der Mehrzahl der Zacken kann in einem Winkel zwischen 70 und 110 Grad bezogen auf eine Tangente an der Hinterkantenverlaufslinie angeordnet sein. Vorzugsweise steht die Winkelhalbierende im Wesentlichen senkrecht auf der Tangente an der Hinterkantenverlaufslinie.

Optional kann die Hinterkante der Rotorblattspitze zumindest abschnittsweise nichtparallel zu einer Pitch-Drehachse des Rotorblatts angeordnet sein.

**Patentansprüche**

1. Windenergieanlagen-Rotorblatt, mit
   einer Vorderkante (202), einer Hinterkante (201), einer Rotorblattwurzel (209), einer Rotorblattspitze (220), einer Saugseite (200b), einer Druckseite (200c), einer Rotorblattlänge (L), einer Profiltiefe (200d), und einer Pitch-Drehachse (200a),

   wobei die Rotorblattspitze (220) als Winglet ausgestaltet ist und zur Druckseite (200c) hin abgewinkelt oder abgebogen ist,
wobei die Rotorblattspitze (220) eine Rotorblattspitzen-Hinterkante (221) aufweist,
wobei die Rotorblattspitzen-Hinterkante (221) eine Hinterkantenverlaufslinie (250) aufweist, welche die Kontur der Rotorblattspitzen-Hinterkante (221) abbildet,
wobei die Rotorblattspitzen-Hinterkante (221) eine Mehrzahl von Zacken (255) zur Verbesserung eines Strömungsverhaltens an der Rotorblattspitzen-Hinterkante (221) aufweist,
wobei die Zacken (255) jeweils eine Zackenspitze (256), zwei Zackenkanten (257) und eine Winkelhalbierende (255a-255e) aufweisen,
wobei die Zackenkanten (257) nicht parallel zu einer Anströmrichtung (200f) vorgesehen sind, welche senkrecht zur Pitch-Drehachse (200a) vorgesehen ist, wobei
die Zackenkanten (257) nicht senkrecht auf einer Tangente an der Hinterkantenverlaufslinie (250) angeordnet sind,
wobei die Hinterkantenverlaufslinie (250) eine Mehrzahl von Abschnitten aufweist, wobei zumindest eine der Abschnitte nicht parallel zu der Pitch-Drehachse (200a) verläuft,
wobei die Winkelhalbierende (255a-255e) einer Zacke (255) nicht senkrecht zur Pitch-Drehachse (200a) steht.

2. Windenergieanlagen-Rotorblatt nach Anspruch 1, wobei
eine Länge der zwei Zackenkanten (257) einer Zacke (255) ungleich ist,
wobei ein Winkel einer Winkelhalbierenden (255a-255e) zu einer Tangente an der Hinterkantenverlaufslinie (250) zwischen 70 und 110 Grad, insbesondere 90 Grad beträgt.

3. Windenergieanlagen-Rotorblatt (200) nach Anspruch 1, wobei

    - jede Zacke (255) wenigstens zwei Zackenkanten (257) aufweist und
    - die Hinterkante (221) einen Zacken-Hinterkantenverlaufswinkel aufweist, der durch eine Zackenkante (257) und einer normal zur Hinterkantenverlaufslinie (250) vorgesehenen Anströmrichtung (A, A') definiert ist,

    wobei der Zacken-Hinterkantenverlaufswinkel kleiner als 90° ist, insbesondere kleiner als 45° ist.

4. Windenergieanlagen-Rotorblatt (200) nach Anspruch 3, wobei der Zacken-Hinterkantenverlaufswinkel entlang einer Länge der Rotorblattspitze (252) variabel ist.

5. Windenergieanlagen-Rotorblatt (200) nach einem der vorstehenden Ansprüche, **dadurch gekennzeichnet, dass** die Hinterkante (221) einen Zacken-Pitchwinkel aufweist, der an einer vorgegebenen Position auf der Hinterkantenverlaufslinie (250) durch eine Tangente (258) definiert ist.

6. Windenergieanlagen-Rotorblatt (200) nach einem der vorstehenden Ansprüche, wobei die mehreren Zacken (255) und/oder Zackenkanten (257) entlang einer bzw. der Länge der Rotorblattspitze (252) an der Hinterkante (221) unsymmetrisch angeordnet sind.

7. Windenergieanlagen-Rotorblatt (200) nach einem der vorstehenden Ansprüche, wobei die Hinterkantenverlaufslinie (250) zumindest teilweise über die Länge der Rotorblattspitze (252) gekrümmt verläuft.

8. Windenergieanlagen-Rotorblatt (200) nach einem der vorstehenden Ansprüche 3 bis 7, wobei die Rotorblattspitze (252) einen Anschlussbereich an ein Rotorblatt (200) und einen Spitzenbereich aufweist, wobei der Zacken-Hinterkantenverlaufswinkel bei den Zackenkanten (257), die zum Anschlussbereich zeigen, von dem Anschlussbereich zum Spitzenbereich zunimmt und/oder bei den Zacken (255), die von dem Anschlussbereich wegzeigen, von dem Anschlussbereich zum Spitzenbereich abnimmt.

9. Windenergieanlage (100) mit wenigstens einem Rotorblatt (200) mit einer Rotorblattspitze (252) nach einem der Ansprüche 1 bis 8.

10. Verfahren zum Herstellen einer Windenergieanlagen-Rotorblattspitze, wobei die Rotorblattspitze, welche eine Hinterkante mit einer Mehrzahl Zacken mit einer Zackengeometrie aufweist, wobei

    - die Hinterkante (201) eine Hinterkantenverlaufslinie (250) aufweist, die die Kontur der Hinterkante (201) abbildet, und
    - die Zackengeometrie in Abhängigkeit von der Hinterkantenverlaufslinie (250) berechnet wird,

    wobei die Zacken (255) jeweils eine Zackenspitze (256), zwei Zackenkanten (257) und eine Winkelhalbierende (255a-255e) aufweisen,
    wobei die Zackenkanten (257) nicht parallel zu einer Anströmrichtung (200f) vorgesehen sind, welche senkrecht zur Pitch-Drehachse (200a) vorgesehen ist,
    wobei die Zackenkanten (257) nicht senkrecht auf einer Tangente an der Hinterkantenverlaufslinie (250) angeordnet sind,
    wobei die Hinterkantenverlaufslinie (250) eine Mehrzahl von Abschnitten aufweist, wobei zumindest eine der Abschnitte nicht parallel zu der Pitch-Drehachse (200a) verläuft,

wobei die Winkelhalbierende (255a-255e) einer Zacke (255) nicht senkrecht zur Pitch-Drehachse (200a) steht.

11. Windenergieanlagen-Rotorblattspitze mit einer Rotorblattspitzen-Hinterkante (221), wobei die Rotorblattspitzen-Hinterkante (221) eine Hinterkantenverlaufslinie (250) aufweist, welche die Kontur der Rotorblattspitzen-Hinterkante (221) abbildet,

wobei die Rotorblattspitzen-Hinterkante (221) eine Mehrzahl von Zacken (255) zur Verbesserung eines Strömungsverhaltens an der Rotorblattspitzen-Hinterkante (221) aufweist,

wobei die Zacken (255) jeweils eine Zackenspitze (256), zwei Zackenkanten (257) und eine Winkelhalbierende (255a-255e) aufweisen,

wobei die Zackenkanten (257) nicht parallel zu einer Anströmrichtung (200f) vorgesehen sind, welche senkrecht zur Pitch-Drehachse (200a) vorgesehen ist, wobei die Zackenkanten (257) nicht senkrecht auf einer Tangente an der Hinterkantenverlaufslinie (250) angeordnet sind,

 wobei die Hinterkantenverlaufslinie (250) eine Mehrzahl von Abschnitten aufweist, wobei zumindest eine der Abschnitte nicht parallel zu der Pitch-Drehachse (200a) verläuft,

 wobei die Zacken (255) jeweils eine Zackenspitze (256), zwei Zackenkanten (257) und eine Winkelhalbierende (255a-255e) aufweisen,

 wobei die Zackenkanten (257) nicht parallel zu einer Anströmrichtung (200f) vorgesehen sind, welche senkrecht zur Pitch-Drehachse (200a) vorgesehen sind,

 wobei die Zackenkanten (257) nicht senkrecht auf einer Tangente an der Hinterkantenverlaufslinie (250) angeordnet sind,

wobei die Hinterkantenverlaufslinie (250) eine Mehrzahl von Abschnitten aufweist, wobei zumindest eine der Abschnitte nicht parallel zu der Pitch-Drehachse (200a) verläuft.

## Claims

1. Wind turbine rotor blade, with
a leading edge (202), a trailing edge (201), a rotor blade root (209), a rotor blade tip (220), a suction side (200b), a pressure side (200c), a rotor blade length (L), a profile depth (200d) and a pitch axis of rotation (200a),
the rotor blade tip (220) being designed as a winglet and being angled away or bent away towards the pressure side (200c),
the rotor blade tip (220) having a rotor blade tip trailing edge (221),

the rotor blade trailing edge (221) having a trailing edge delimiting line (250), which replicates the contour of the rotor blade tip trailing edge (221),
the rotor blade tip trailing edge (221) having a plurality of serrations (255) to improve flow behaviour at the rotor blade tip trailing edge (221),
the serrations (255) respectively having a serration tip (256), two serration edges (257) and an angle bisector (255a-255e),
the serration edges (257) being provided non-parallel to a direction of incident flow (200f) that are provided perpendicular to the pitch axis of rotation (200a),
the serration edges (257) being arranged non-perpendicular to a tangent to the trailing edge delimiting line (250),
the trailing edge delimiting line (250) having a plurality of portions, at least one of the portions extending non-parallel to the pitch axis of rotation (200a),
the angle bisector (255a-255e) of a serration (255) being non-perpendicular to the pitch axis of rotation (200a).

2. Wind turbine rotor blade according to Claim 1,
a length of the two serration edges (257) of a serration (255) being unequal,
an angle of an angle bisector (255a-255e) to a tangent to the trailing edge delimiting line (250) being between 70 and 110 degrees, in particular 90 degrees.

3. Wind turbine rotor blade (200) according to Claim 1,

 - each serration (255) having at least two serration edges (257) and
 - the trailing edge (221) having a serration trailing edge delimiting angle, which is defined by a serration edge (257) and a direction of incident flow (A, A') provided normal to the trailing edge delimiting line (250),

the serration trailing edge delimiting angle being less than 90°, in particular less than 45°.

4. Wind turbine rotor blade (200) according to Claim 3, the serration trailing edge delimiting angle being variable along a length of the rotor blade tip (252).

5. Wind turbine rotor blade (200) according to one of the preceding claims, **characterized in that** the trailing edge (221) has a serration pitch angle which is defined at a predetermined position on the trailing edge delimiting line (250) by a tangent (258).

6. Wind turbine rotor blade (200) according to one of the preceding claims, the plurality of serrations (255) and/or serration edges (257) being arranged on the trailing edge (221) asymmetrically along a or the length of the rotor blade tip (252).

7. Wind turbine rotor blade (200) according to one of the preceding claims, the trailing edge delimiting line (250) at least partially extending in a curved manner over the length of the rotor blade tip (252).

8. Wind turbine rotor blade (200) according to one of the preceding Claims 3 to 7, the rotor blade tip (252) having a region where it is connected to a rotor blade (200) and a tip region, the serration trailing edge delimiting angle increasing from the connecting region to the tip region in the case of the serration edges (257) that point towards the connecting region and/or decreasing from the connecting region to the tip region in the case of the serrations (255) that point away from the connecting region.

9. Wind turbine (100) with at least one rotor blade (200) with a rotor blade tip (252) according to one of Claims 1 to 8.

10. Method for producing a wind turbine rotor blade tip, the rotor blade tip which has a trailing edge with a plurality of serrations with a serration geometry,

    - the trailing edge (201) having a trailing edge delimiting line (250), which replicates the contour of the trailing edge (201), and
    - the serration geometry being calculated in dependence on the trailing edge delimiting line (250),

the serrations (255) respectively having a serration tip (256), two serration edges (257) and an angle bisector (255a-255e),
the serration edges (257) being provided non-parallel to a direction of incident flow (200f) that are provided perpendicular to the pitch axis of rotation (200a),
the serration edges (257) being arranged non-perpendicular to a tangent to the trailing edge delimiting line (250),
the trailing edge delimiting line (250) having a plurality of portions, at least one of the portions extending non-parallel to the pitch axis of rotation (200a),
the angle bisector (255a-255e) of a serration (255) being non-perpendicular to the pitch axis of rotation (200a).

11. Wind turbine rotor blade tip with a rotor blade tip trailing edge (221), the rotor blade tip trailing edge (221) having a trailing edge delimiting line (250), which replicates the contour of the rotor blade tip trailing edge (221),
the rotor blade tip trailing edge (221) having a plurality of serrations (255) to improve flow behaviour at the rotor blade tip trailing edge (221),
the serrations (255) respectively having a serration tip (256), two serration edges (257) and an angle bisector (255a-255e),

    the serration edges (257) being provided non-parallel to a direction of incident flow (200f) that is perpendicular to the pitch axis of rotation (200a),
    the serration edges (257) being arranged non-perpendicular to a tangent to the trailing edge delimiting line (250),
    the trailing edge delimiting line (250) having a plurality of portions, at least one of the portions extending non-parallel to the pitch axis of rotation (200a),
    the serrations (255) respectively having a serration tip (256), two serration edges (257) and an angle bisector (255a-255e),
    the serration edges (257) being provided non-parallel to a direction of incident flow (200f) that are provided perpendicular to the pitch axis of rotation (200a),
    the serration edges (257) being arranged non-perpendicular to a tangent to the trailing edge delimiting line (250),
    the trailing edge delimiting line (250) having a plurality of portions, at least one of the portions extending non-parallel to the pitch axis of rotation (200a).

**Revendications**

1. Pale de rotor d'éolienne avec
un bord d'attaque (202), un bord de fuite (201), un pied de pale de rotor (209), une pointe de pale de rotor (220), un extrados (200b), un intrados (200c), une longueur de pale de rotor (L), une profondeur de profil (200d), et un axe de rotation de calage (200a),
dans laquelle la pointe de pale de rotor (220) est configurée comme winglet et est coudée ou pliée vers l'intrados (200c),
dans laquelle la pointe de pale de rotor (220) présente un bord de fuite de pointe de pale de rotor (221),
dans laquelle le bord de fuite de pointe de pale de rotor (221) présente une ligne d'allure de bord de fuite (250) qui représente le contour du bord de fuite de pointe de pale de rotor (221),
dans laquelle le bord de fuite de pointe de pale de rotor (221) présente une pluralité de dents (255) pour l'amélioration d'un comportement d'écoulement au niveau du bord de fuite de pointe de pale de rotor (221),
dans laquelle les dents (255) présentent respectivement une pointe de dent (256), deux arêtes de dent (257) et une bissectrice (255a-255e),

dans laquelle les arêtes de dent (257) ne sont pas prévues parallèlement à un sens d'afflux (200f) qui est prévu perpendiculairement à l'axe de rotation de calage (200a),

dans laquelle les arêtes de dent (257) ne sont pas agencées perpendiculairement à une tangente au niveau de la ligne d'allure de bord de fuite (250),

dans laquelle la ligne d'allure de bord de fuite (250) présente une pluralité de sections, dans laquelle au moins une des sections ne s'étend pas parallèlement à l'axe de rotation de calage (200a),

dans laquelle la bissectrice (255a-255e) d'une dent (255) n'est pas perpendiculaire à l'axe de rotation de calage (200a).

2. Pale de rotor d'éolienne selon la revendication 1, dans laquelle

une longueur des deux arêtes de dent (257) d'une dent (255) est inégale, dans laquelle un angle d'une bissectrice (255a-255e) par rapport à une tangente au niveau de la ligne d'allure de bord de fuite (250) est compris entre 70 et 110 degrés, en particulier est de 90 degrés.

3. Pale de rotor d'éolienne (200) selon la revendication 1, dans laquelle

- chaque dent (255) présente au moins deux arêtes de dent (257) et
- le bord de fuite (221) présente un angle d'allure de bord de fuite de dent qui est défini par une arête de dent (257) et un sens d'afflux (A, A') prévu normalement à la ligne d'allure de bord de fuite (250),

dans laquelle l'angle d'allure de bord de fuite de dents est inférieur à 90°, en particulier est inférieur à 45°.

4. Pale de rotor d'éolienne (200) selon la revendication 3, dans laquelle l'angle d'allure de bord de fuite de dents est variable le long d'une longueur de la pointe de pale de rotor (252).

5. Pale de rotor d'éolienne (200) selon l'une des revendications précédentes, **caractérisée en ce que** le bord de fuite (221) présente un angle de calage de dents qui est défini au niveau d'une position prescrite sur la ligne d'allure de bord de fuite (250) par une tangente (258).

6. Pale de rotor d'éolienne (200) selon l'une des revendications précédentes, dans laquelle les plusieurs dents (255) et/ou arêtes de dent (257) sont agencées de manière non symétrique le long d'une ou de la longueur de la pointe de pale de rotor (252) au niveau du bord de fuite (221).

7. Pale de rotor d'éolienne (200) selon l'une des revendications précédentes, dans laquelle la ligne d'allure de bord de fuite (250) s'étend de manière courbée au moins partiellement sur la longueur de la pointe de pale de rotor (252).

8. Pale de rotor d'éolienne (200) selon l'une des revendications précédentes 3 à 7, dans laquelle la pointe de pale de rotor (252) présente une zone de raccordement à une pale de rotor (200) et une zone de pointe, dans laquelle l'angle d'allure de bord de fuite de dents augmente près des arêtes de dent (257) qui sont tournées vers la zone de raccordement, de la zone de raccordement à la zone de pointe et/ou diminue près des dents (255) qui sont éloignées de la zone de raccordement, de la zone de raccordement à la zone de pointe.

9. Éolienne (100) avec au moins une pale de rotor (200) avec une pointe de pale de rotor (252) selon l'une des revendications 1 à 8.

10. Procédé de fabrication d'une pointe de pale de rotor d'éolienne, dans lequel la pointe de pale de rotor qui présente un bord de fuite avec une pluralité de dents avec une géométrie de dents, dans lequel

- le bord de fuite (201) présente une ligne d'allure de bord de fuite (250) qui représente le contour du bord de fuite (201), et
- la géométrie des dents est calculée en fonction de la ligne d'allure de bord de fuite (250),

dans lequel les dents (255) présentent respectivement une pointe de dent (256), deux arêtes de dent (257) et une bissectrice (255a-255e),

dans lequel les arêtes de dent (257) ne sont pas prévues parallèlement à un sens d'afflux (200f) qui est prévu perpendiculairement à l'axe de rotation de calage (200a),

dans lequel les arêtes de dent (257) ne sont pas agencées perpendiculairement à une tangente au niveau de la ligne d'allure de bord de fuite (250),

dans lequel la ligne d'allure de bord de fuite (250) présente une pluralité de sections, dans lequel au moins une des sections ne s'étend pas parallèlement à l'axe de rotation de calage (200a),

dans lequel la bissectrice (255a-255e) d'une dent (255) n'est pas perpendiculaire à l'axe de rotation de calage (200a).

11. Pointe de pale de rotor d'éolienne avec un bord de fuite de pointe de pale de rotor (221), dans laquelle le bord de fuite de pointe de pale de rotor (221) présente une ligne d'allure de bord de fuite (250) qui représente le contour du bord de fuite de pointe de pale de rotor (221),

dans laquelle le bord de fuite de pointe de pale de rotor (221) présente une pluralité de dents (255) pour l'amélioration d'un comportement d'écoulement au niveau du bord de fuite de pointe de pale de rotor (221),

dans laquelle les dents (255) présentent respectivement une pointe de dent (256), deux arêtes de dent (257) et une bissectrice (255a-255e),

dans laquelle les arêtes de dent (257) ne sont pas prévues parallèlement à un sens d'afflux (200f) qui est prévu perpendiculairement à l'axe de rotation de calage (200a),

dans laquelle les arêtes de dent (257) ne sont pas agencées perpendiculairement à une tangente au niveau de la ligne d'allure de bord de fuite (250),

dans laquelle la ligne d'allure de bord de fuite (250) présente une pluralité de sections, dans laquelle au moins une des sections ne s'étend pas parallèlement à l'axe de rotation de calage (200a),

dans laquelle les dents (255) présentent respectivement une pointe de dent (256), deux arêtes de dent (257) et une bissectrice (255a-255e),

dans laquelle les arêtes de dent (257) ne sont pas prévues parallèlement à un sens d'écoulement (200f) qui sont prévues perpendiculairement à l'axe de rotation de calage (200a),

dans laquelle les arêtes de dent (257) ne sont pas agencées perpendiculairement à une tangente au niveau de la ligne d'allure de bord de fuite (250),

dans laquelle la ligne d'allure de bord de fuite (250) présente une pluralité de sections, dans laquelle au moins une des sections ne s'étend pas parallèlement à l'axe de rotation de calage (200a).

**Fig. 1**

**Fig. 2**

**Fig. 3**

**Fig. 4**

**Fig. 5**

**Fig. 6**

**Fig. 7**

**Fig. 8**

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008037368 A1
- DE 102011050661 A1
- US 20030175121 A1
- US 5088665 A
- EP 1314885 B1
- EP 0652367 A1
- WO 2014086919 A1